# EUROPEAN PATENT SPECIFICATION

(11) **EP 4 598 814 B1**
(45) Date of publication and mention of the grant of the patent: **20.05.2026**
(21) Application number: 23817221.7
(22) Date of filing: 10.10.2023
(51) Int. Cl.: B64C 39/02, B64U 10/14, B64U 20/77, B64U 101/26, B64U 101/30

(54) **HYBRID LOCOMOTION ROBOTIC DEVICE FOR PLANT INSPECTION**
ROBOTISCHE VORRICHTUNG MIT HYBRIDER FORTBEWEGUNG ZUR PFLANZENINSPEKTION
DISPOSITIF ROBOTIQUE DE LOCOMOTION HYBRIDE POUR INSPECTION DE CENTRALE

(30) Priority: 14.10.2022 IT 202200021243
(43) Date of publication of application: 13.08.2025
(73) Proprietor: TERRIBILE, Antonio, 31022 Preganziol (IT)
(72) Inventor: TERRIBILE, Antonio, 31022 Preganziol (IT)
(74) Representative: Morabito, Sara
(86) International application number: PCT/IT2023/050225
(87) International publication number: WO 2024/079769

(56) References cited:
- WO-A1-2020/049604
- CN-A- 103 522 854
- CN-A- 108 545 183
- CN-U- 207 956 029
- JP-A- 2021 165 142
- KR-A- 20210 084 750
- US-A1- 2006 226 281
- US-A1- 2022 227 489

## Description

The invention which is the subject of the present patent application consists of a hybrid locomotion robotic device for the inspection of plants, particularly but not exclusively oil, chemical or electric power generation plants, said hybrid locomotion robotic device being used to replace the human resources involved in the inspection of such plants.

### The field of application

The invention that is the subject of this patent application finds application in environments, in particular plants, where it is appropriate/necessary to carry out periodic inspections to check the condition of the plant itself.

In particular, the invention that is the subject of this patent application finds application in the inspection activity for use in an industrial plant, for example in the oil, chemical or electric power generation sectors, and, in particular, relates to a robotic device for automatically and efficiently performing routine inspections in a complex environment, non structured for automation, thus increasing productivity and safety of operations now typically performed by operators.

### State of the art

Plants in general, and those in the oil industry in particular, are very complex environments with thousands of points to inspect, typically looking for gas or liquid leaks, corrosion, abnormal temperatures or vibrations. In some cases, it is necessary to read the gauges of instruments that are not reported in the plant control room.

These operations are typically routine, repetitive and potentially suitable for a robot; however, typically a plant is not structured for robots: it is a congested environment, with devices of different nature and arranged in a non-uniform manner, with stairs to be ascended/descended of different slopes, in which the transit passages of the operators, in the narrowest sections, do not exceed 80 cm in width.

The atmosphere can also be classified as potentially explosive. On the other hand, the operating and environmental conditions present risks for operators and can be extreme: there are risks of injury for which operators must always be equipped with appropriate personal protective equipment, temperatures can reach values between -40°C and +40°C, there can be dangerous situations related to the release of toxic substances (e.g. H₂S). It may also be necessary to intervene in emergency conditions and in non-nominal situations, e.g. at the occurrence of possible accidents, for reconnaissance and first response purposes.

To perform the inspection, operators have to physically travel to the site, often to locations that are expensive to reach and to stay in, such as deserts and/or platforms in the middle of the sea. The huge amount of inspection data collected in this way often then has to be digitised to be usable by analysis software for diagnostic and predictive purposes. As such, there would be several safety and cost advantages to reducing human intervention. Nevertheless, plant inspection operations are typically still performed by operators, essentially because a cost-effective automation solution has not yet been found.

At the state of the art, a number of solutions relating to the realisation of automated devices for the inspection of plants, in particular plants with explosive atmosphere, are the subject of patent applications.

For example, patent applications CN210605473, CN215968708U CN108508901A describe inspection systems, for example power plant inspection, said inspection being performed by means of robots whose movement is enabled by means of wheels of the type known in the locomotion sector.

The systems described by the above-mentioned documents have the main disadvantage that the vehicles themselves are not suitable for non-linear paths such as, for example, paths with stairs and therefore do not allow movement between one floor or false floor and another. Document US9463574B2 describes the realisation of a robot used for inspection, said robot being equipped with tracks; however, as for the previous known state of the art cases described, the presence of tracks does not facilitate the overcoming of architectural elements such as, for example, stairs or the like. Patent applications CN111300372A and JP2014104797A describe systems that can be defined as hybrid in that they are equipped with both wheels or tracks and an aerial vehicle capable of lifting off to inspect areas of the plant that cannot be reached, but with important limitations on the flight autonomy that can be obtained in this way.

The solution described in the above-mentioned documents overcomes the disadvantages of wheeled or tracked vehicles in the case of stairs, due to the presence of the aerial vehicle that intervenes in the inspection of areas that these vehicles cannot reach, however it is particularly disadvantageous in terms of operating autonomy.

Known alternative solutions, such as vehicles equipped with articulated tracks or quadrupedal robots, are examples of overcoming the disadvantages of the state of the art described, but are particularly complex mechanically and costly in terms of implementation.

Furthermore, vehicles with articulated tracks are not only complex from the point of view of mechanical construction, but also not particularly versatile in the case of stairs with variable riser and tread dimensions. The implementation of quadrupedal robots is particularly complex in terms of controlling and coordinating the movements of individual mechanical limbs. Such systems have a high potential for moving over uneven terrain, which, however, is not reflected in a plant, and cannot therefore be fully exploited. These systems are indeed capable of ascending/descending stairs, however, the movement must be specifically controlled, particularly in the case of steep slopes and have a limit on the maximum slope. Devices of the robot type with a hybrid locomotion system and equipped with rotors to enable the robot to be lifted off the ground are known to exist in the state of the art. For example, patent application KR20170092068 A describes an embodiment of a robotic device comprising a main body, substantially comprising a longitudinally extending bar equipped at the ends with a pair of transverse bars. According to the above-mentioned document, a wheel comprising a rim and having no spokes is associated with the lateral ends of each pair of transverse bars so that a propeller, associated with the lateral end of the transverse bar to which the wheel without spokes is associated, can freely rotate within the inner space of the rim.

Patent application CN215701729 U describes the realisation of a robotic device, said device consisting of a square-shaped frame to the ends of which are associated four wheels and comprising four rotors centrally associated with a substantially square body.

Patent application CN103522854A describes the realisation of a robotic device comprising a longitudinal central element, substantially rectangular in shape, featuring a pair of rotors on each of the larger lateral ends and comprising four wheels located at the lateral ends.

Patent application CN206264729 U describes the realisation of a robotic device consisting of a box-like body whose upper surface, at the lateral ends, includes devices with a propeller, each device being associated with a bracket protruding from the upper surface of the box-like body, extending orthogonally to the plane of the upper surface itself.

Patent applications CN110171564 and CN105034729A describe an embodiment of a robotic device comprising a flat central structure having four appendages forming a substantially cross-shaped structure. According to that described in document CN110171564, a motor of the brushless type is housed at the end of each appendage, each equipped with a propeller while according to that described in document CN105034729A a rotor is associated at the end of each appendage of the substantially cross-shaped structure.

Patent application CN108545183 describes an aircraft equipped with wheels and comprising a longitudinal base substantially consisting of a box-like body, said aircraft comprising four rotors each arranged at the vertices of the surface of the base, said base containing within it a control unit and a power unit.

The aircraft referred to in the above-mentioned document also incudes a pair of side wings and a pilot's compartment.

The four rotors with which the aircraft is equipped allow the lifting movement and stability during flight is enabled by the presence of a propeller positioned at the rear of the aircraft itself.

The aircraft described in the aforementioned document therefore needs to be piloted by means of a person on board, as well as being particularly bulky in its structural characteristics in case of use as an inspection tool in areas such as industrial plants.

In addition, the presence of the wheels only allows take-off or landing operations but does not allow movement on the ground for non-aerial inspection activities.

Document US 2022227489 A1 describes a multi-rotor aircraft in which the rotors are of different sizes.

In particular, the aircraft described in the document consists of a vertical take-off and landing vehicle - known in the reference sector by the acronym VTOL.

In particular, the above-mentioned document concerns the realisation of a VTOL type vehicle equipped with an even number of main rotors and a secondary set of auxiliary rotors having a diameter different from the main rotors.

According to the above-mentioned document, the vehicle covered by the patent application has a plurality of main rotors uniformly arranged around a plane of symmetry of the vehicle itself.

More particularly, the document describes and claims a multi-rotor vehicle comprising a central structure constituting the main structure, a plurality of main rotors connected to the central structure and arranged uniformly around a plane of symmetry of the vehicle, a first set of auxiliary rotors connected to the central structure wherein one of the first set of auxiliary rotors is disposed in front of the plurality of main rotors along the plane of symmetry, and wherein one of the first set of auxiliary rotors is disposed behind the plurality of main rotors along the plane of symmetry, wherein each of the rotors of the first set of auxiliary rotors is configured to be smaller than each of the plurality of main rotors, and wherein each of the rotors of the first set of auxiliary rotors is configured to control a pitch moment of the vehicle. According to the above-mentioned document, the at least two horizontal thrust rotors connected to the body structure and arranged uniformly around the plane of symmetry are configured to generate thrust in a forward direction such that a plane of rotation of the thrust rotors is perpendicular to a plane of rotation of the main rotors.

The vehicle described in the above-mentioned document is not suitable for ground-based inspection and is so complex from a manufacturing point of view that it cannot be used in environments that are not free from obstacles such as industrial plants and the like.

All the robot configurations mentioned above are thus designed for different contexts, but none are suitable for the specific plant environment.

Document JP 2021165142 A describes an unmanned hybrid locomotion robotic device which is suitable for plant inspection. It comprises four wheels, four identical rotors allowing to lift the device off the ground and a thrust generating propeller at the rear. However, it is difficult to precisely orient the robotic device about its pitch and roll axes.

The aim of the invention which is the subject-matter of this patent application is therefore to overcome the disadvantages of the above-mentioned state of the art, in particular with regard to the implementation of a system for the inspection of a plant, said system being suitably perfected for the purpose of moving along inspection paths with the presence of stairs, said system being simplified with respect to known systems.

A further aim of the invention which is the subject of the present application is to realise a robotic device for inspection that is much less complex than known solutions, with consequent advantages in terms of implementation and maintenance costs, and more efficient.

### Summary of the Invention

The subject matter of this patent application is a hybrid locomotion robotic device for the inspection of plants, such as, but not limited to, oil or chemical plants or electrical power plants, as a replacement for manpower currently employed on site and with significant advantages in terms of efficiency and safety. The operator can thus supervise operations remotely, remaining in the control room.

To this end, the robotic device subject of the present invention has a hybrid locomotion configuration, specifically designed to be more efficient on the typical plant route: with wheels to move easily on flat sections and with rotors to be able to lift itself off the ground, flying just enough to overcome sections with stairs and possible obstacles.

In particular, the hybrid locomotion device has the features of the appended independent claim 1, and preferably the features of the appended dependent claims, such that it is a small device capable of passing through the narrowest plant passages and of lifting itself off the ground when necessary.

In particular, the hybrid locomotion device which is the subject-matter of this patent application includes a base with longitudinal extension, consisting of a box-shaped body of substantially rectangular shape whose width is in the order of 50 cm, provided with an upper surface, said device comprising inspection tools and at least two first rotors and at least two second rotors, said robotic device (100) comprising at least four wheels at the bottom.

In particular, the at least two first rotors, which are larger, and the at least two second rotors, which are smaller, are arranged along the longitudinal plane and along the transverse plane of the base and contained therein.

According to the invention which is the subject matter of the present application, the longitudinal base internally accommodates a control unit with remote connection to a control station and internally accommodates a power supply unit. According to the invention which is the subject matter of the present patent application, the longitudinal base comprises a pan-tilt type handling device to which inspection instruments of the optical type are associated, said handling device presenting at least one panoramic rotation axis orthogonal to the support plane of the robotic device and a tilt rotation axis with respect to the support plane of the robotic device. The longitudinal base may include an anthropomorphic robotic arm with at least five degrees of freedom, at the termination of which are associated optical type inspection instruments and/or non-destructive, contact-type inspection probes.

The hybrid locomotion robotic device, realised as described above, also includes means for localisation within the plant and devices for measuring the relative distance between the robotic device itself and obstacles, objects, people.

### Brief description of the drawings

The invention that is the subject matter of the present patent application is depicted in the attached drawings in which:
Fig 1 - Fig 2 - Fig 3 - overall view of the device which is the subject matter of the present patent application;
Fig 4: identified block diagram of the elements constituting the device which is the subject-matter of the present patent application;
Fig 4.1: exemplification by means of a block diagram of the functional units of the overall robotic system of which the device covered by the patent application is part and their allocation within the plant.
Fig 5: exemplification by means of a block diagram of the control system of the device covered by the present patent application.

### Detailed Description

The present invention will be further described in detail below. This form of embodiment is implemented based on the technical solution of the present invention and detailed embodiments are provided, but the scope of protection of the present invention is not limited to the following embodiments.

Modifications and improvements may be made to the embodiments described below without departing from the scope of the invention as defined in the appended claims.

With reference to the annexed Drawings, the hybrid locomotion robotic device that is the subject matter of the present patent application is indicated by reference 100.

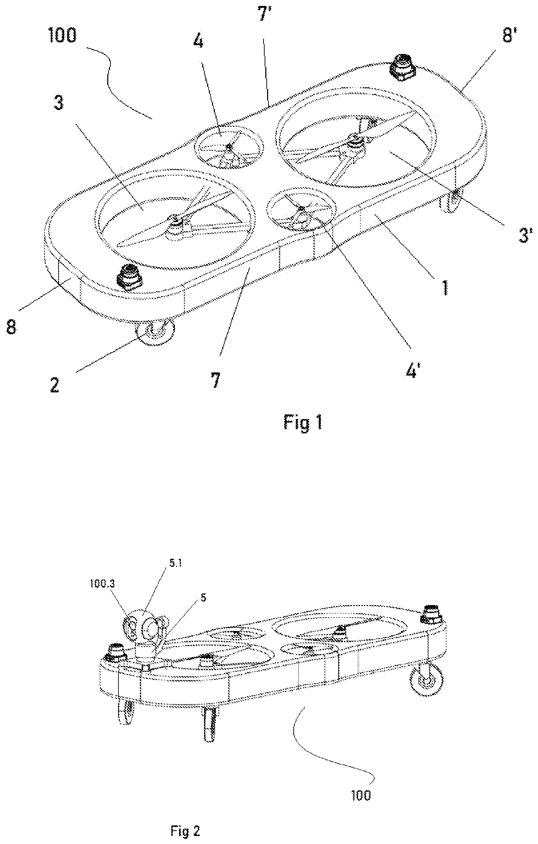

With reference to Fig 1, Fig 2 and Fig 3 the hybrid locomotion robotic device (100) comprises a base with longitudinal extension (1, Fig 1) comprising a box-like body having a substantially rectangular shape with an upper surface, a lower surface, a first pair of lateral surfaces (7, 7') and a second pair of lateral surfaces (8,8') said second pair of lateral surfaces (8,8') being shorter in length than the first pair of lateral surfaces (7,7'), said second pair of lateral surfaces (8,8') being orthogonal to the first pair of lateral surfaces (7,7').

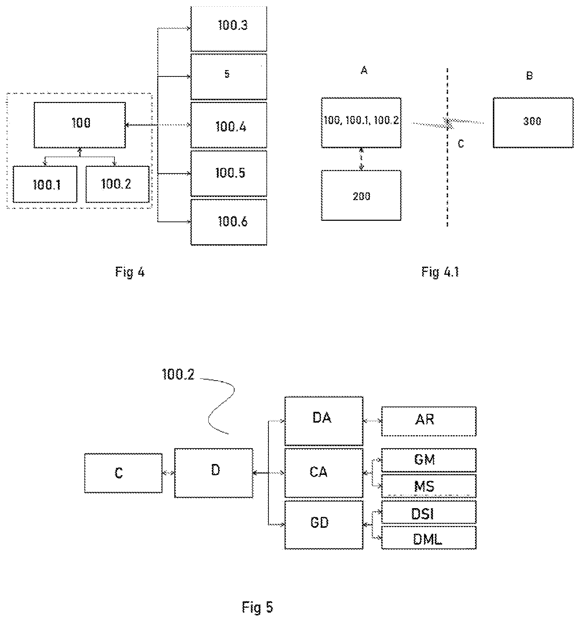

According to the present invention, the longitudinal base (1) internally houses a control unit (100.2, Fig 4) and a power supply unit (100.1, Fig 4).

The base (1) also has on its lower surface at least four wheels (2). In a preferred embodiment, the at least four wheels (2) are omnidirectional wheels. In a preferred, but not exclusive embodiment, the at least two wheels (2) are of the fully actuated omnidirectional wheel type and the remaining at least two wheels are of the passive wheel type. In a further preferred, but non-exclusive embodiment, the at least four wheels (2) are fully actuated.

According to the present invention application, the longitudinal base (1) accommodates at least two first rotors (3,3') and at least two second rotors (4,4').

In particular, the at least two first rotors (3,3') enable in-flight elevation of the hybrid locomotion robotic device (100) and the at least two second rotors (4,4') perform the action of stabilising the robotic device (100) when in flight.

The at least two first rotors (3.3') are positioned at the lateral ends corresponding to the second pair of lateral surfaces (8.8') of the base (1) and the at least two second rotors (4.4') are positioned centrally with respect to the first pair of lateral surfaces (7.7') of the base (1) and are positioned in front of one another.

According to what has been previously described, the at least two first rotors (3,3') are positioned longitudinally with respect to the plane of the base (1).

According to the present invention, the at least two first rotors (3,3') are larger in size than the at least two second rotors (4,4') having an attitude control function.

The central axes of the two first rotors (3,3') and/or the second rotors (4,4') have variable and controlled inclination with respect to the longitudinal plane of the base (1) of the device (100) so as to be able to produce a lateral thrust useful to avoid trespassing and to oppose possible wind disturbances without having to vary the attitude of the robotic device (100) for this purpose.

In a preferred but non-binding embodiment, the control of the inclination movement is by means of suitable algorithms expressly excluded from the present patent application.

With reference to Fig 2, the robotic device (100) further has a handling device (5) to which an assembly (5.1) of inspection tools (100.3) is associated.

By way of example but not limited to, the group (5.1) consists of a generic solid body associated with which one or more inspection tools (100.3).

In a second preferred, but non-exclusive embodiment, the assembly (5.1) comprises a support device for associating one or more inspection instruments (100.3).

In a preferred, but non-exclusive embodiment, the handling device (5) of the inspection instruments (100.3) comprises a pivoting device having at least two axes of motion, commonly known in the relevant industry as a "pan-tilt" device.

In particular, a first axis of motion is orthogonal to the support plane of the device (100) and corresponds to a panning movement and a second axis of motion corresponds to a tilting movement with respect to support plane of the device (100), these two movements being able to take place independently due to the presence of two distinct drive motors, not visible in the attached drawings.

By way of example but not limited to, irrespectively of the implemenation method of the group (5.1), the inspection instruments (100.3) are of the type optical instruments comprising at least one or more cameras for visual inspection and/or thermographic inspection and/or devices for detecting gas leaks. In a preferred, but not exclusive embodiment, the inspection instruments (100.3) are reversibly associated with the group (5.1).

In a preferred embodiment, the handling device (5) of the group (5.1) is housed near a lateral end of the base (1) of the robotic device (100).

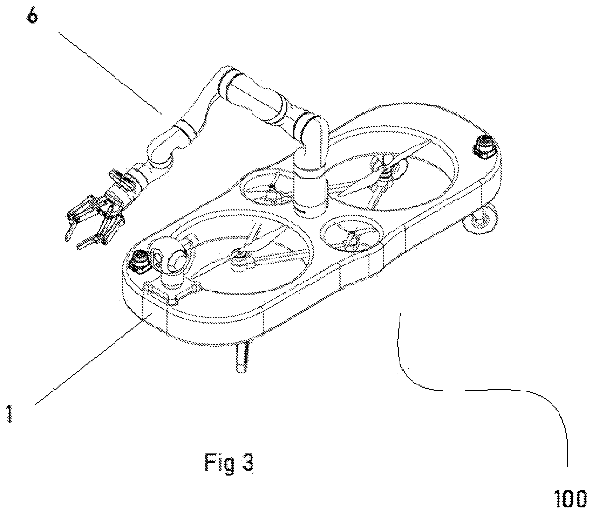

With reference to Fig 3, in a preferred, but not exclusive embodiment, an anthropomorphic robotic arm (6) with at least five degrees of freedom is associated with the base (1) of the robotic device (100).

In a preferred, but not exclusive embodiment, the anthropomorphic robotic arm (6) is positioned between the two second rotors (4,4') of the base (1) of the device (100).

In a further preferred, but non-exclusive embodiment, inspection instruments (100.3) of the type optical instruments and/or non-destructive inspection probes are reversibly associated with the termination of the anthropomorphic robotic arm (6), said inspection probes being positionable in contact with the structures to check, for example, their corrosion status or other non-destructive detection parameters included in the inspection operation.

The hybrid locomotion robotic device (100) realised as described above includes (Fig 4, Fig 4.1) a power supply unit (100.1, Fig 4).

In a preferred embodiment, the power supply assembly (100.1) consists of a rechargeable battery pack.

According to the present patent application, irrespectively of the preferred embodiments, the robotic device (100) includes a control unit (100.2) connected (C. Fig 4.1) to the control station (300, Fig 4.1), said connection being implemented, by way of example but not limitated to, by means of a radio frequency receive and transmit system.

In an exemplifying, but not limiting, operating mode, a charging station (200, Fig 4.1) of the power supply unit (100.1) of the robotic device (100) is positioned at the inspection site (A, Fig 4.1) intended for inspection, and in a remote control room (B, Fig 4.1), separate from the inspection site (A), the control station (300) is provided.

Preferably, the control station (300) of the robotic device (100) comprises control and display devices for remote control, including a mission termination button in the event of an emergency. The robotic device (100) implemented as described above includes:
- Inspection instruments (100.3);
- Means for handling (5) inspection tools (100.3);
- Means for audio and/or video detection (100.4) such as, but not limited to, video cameras and/or microphones;
- Means (100.5) for the localisation of the robotic device (100) within the plant, of the lidar type and/or 3D cameras;
- Devices (100.6) for measuring the relative distance between the robotic device (100) and any obstacles or persons, said devices (100.6) being of the sensor type, said devices (100.6) comprising at least one altitude measuring device, of the altimeter type, capable of managing the keeping of the flight altitude previously set for overcoming stairs and/or obstacles.

In particular, the control unit (100.2, Fig 4, Fig 5), housed on the robotic device (100), realised as described above, performs the following functions:
- Connection (C, Fig 4, Fig 5) to the control station (A, Fig 5),
- Control (D, Fig 5) of the actions of:
   actuation (AR) of the first (3,3') and second (4,4') rotors for low-altitude flight when overcoming stairs and/or obstacles, said control taking place by means of autopilot device (DA, Fig 5),
   management (GM Fig 5) of wheel motion (2),
   management (GS Fig 5) of the handling of the inspection instruments (100.3),
   said management (GM) of wheel motion and management (GS) of the handling of the inspection instruments (100.3) being performed through control (CA, Fig 5) of the axes of motion, management (GD, Fig 5) of the data acquired by the inspection instruments (DSI, Fig 5) and of the data acquired by the localisation means (DML, Fig 5).

In a preferred, but not exclusive embodiment, the control system (D) is interfaced with a dedicated system (100.5) for autonomous localisation and navigation within the plant, where the GPS signal is denied, for positioning the device (100) at the points to be inspected with an error not exceeding 2 cm.

Once the pre-programmed position in the mission has been reached, the hybrid locomotion robotic device (100) covered by this patent application can also include image processing programmes based on Artificial Intelligence techniques, e.g. neural networks, to identify exactly, in the on-board camera image, the specific point at which to aim the inspection tool.

In a preferential, but not exclusive, embodiment, localisation means (DML) exploit the Lidar and/or 3D camera outputs on board the robotic device to generate clouds of points to be suitably compared with 3D model of the plant, according to SLAM (Simultaneous Localisation and Mapping) type techniques.

In a second preferred form of realisation, the localisation means (DML) are based on UWB (Ultra Wide Band) technology, being for this purpose equipped with appropriate receivers.

In a variant of the previous embodiments, the localisation means (DML) can include sensors positioned on the wheels (2) and the position is estimated according to odometric techniques in support of the aforementioned techniques.

According to a preferred embodiment, the autopilot device (DA) is provided with suitable algorithms, expressly excluded from the present patent application, to:
enable the robotic device (100) to be kept in flight at a predetermined altitude, e.g. 1 m above the ground, based on the measurement parameters of the altitude sensing devices (100.6), e.g. altimeters
enable the stability of the robotic device (100) within a confined space, even in the presence of possible wind-induced disturbances.

In a preferred embodiment, the robotic device (100) is made so as to be explosion-proof in environments with the presence of gas and includes, for added safety, at least one sensor for detecting the presence of gas and auto-shutdown command in case of detection of parameters related to a potentially explosive condition.

The robotic device (100) subject matter of this patent application can include means for preventing movement outside predetermined areas, said means being based, as an example but not limited to, optical techniques and/or local radio localisation systems.

In a preferred, but not exclusive embodiment, the control system (D) includes image processing programs based on Artificial Intelligence techniques to detect anomalies in the plant based on signals produced by on-board cameras (e.g. presence of rust on structures) and microphones (100.4) and inspection instruments (100.3).

As previously described, the device subject of the present patent application implements different control modes, with different levels of automation and sharing with a remote operator, depending on the type of task to be performed. For routine tasks, the device (100) automatically reproduces a pre-programmed mission, along the (repetitive) inspection path, with supervision of the execution by the operator.

Optionally, the operator controls the robotic device (100) in manual control mode (e.g. for programming the route to be repeated automatically or in non-nominal situations, such as intervention in an emergency situation).

Optionally, the control mode is shared or semi-automatic: e.g. speed controlled manually by the operator along a pre-programmed path to be repeated automatically by the control system. Description of an exemplifying mode of operation

The operation of the robotic device (100) covered by this patent application comprises two different operational phases:
- programming of the inspection mission
- mission execution.

Programming is typically performed in the plant, by manually commanding the robotic device (100) to perform a given inspection route and storing the positions in which to perform the surveys with on-board instruments.

In a preferred embodiment, the control station is equipped with an off-line mission planning mode, based on the 3D CAD model of the plant if available, without having to manually execute and store the route in the plant.

The mission thus programmed can then be executed as often as required by the plant management plans, activating the robotic device from the remote control room and supervising execution. In case of anomalies, the operator can intervene and modify the mission online. Typically, the robotic device departs for its mission from its charging station, to which it returns whenever the autonomy of the on-board batteries is running low.

Wherever possible, on flat surfaces, the robotic device moves by driving its wheels. When overcoming stairs or other obstacles, the robotic device stops and starts the rotors to lift itself off to a predetermined altitude above the ground. Once the obstacle has been overcome, the robotic device starts moving again using the wheels.

When the robotic device reaches a predefined point for inspection, it stops there and activates the instrument handling device and collects data to be transmitted to the control station.

For routine operations, the device (100) automatically reproduces a pre-programmed mission, along a repetitive inspection route, with supervision of the execution by the operator.

In a preferred embodiment, the operator has the option of controlling the robotic device in manual mode - e.g. for programming the path to be repeated automatically or in non-nominal situations, such as intervention in an emergency situation.

In a further preferred form of realisation, the control mode is optionally shared or semi-automatic: e.g. speed controlled manually by the operator along a pre-programmed path to be automatically realised by the control system.

Optionally, the control station is configured to provide the operator with an immersive experience, creating for the remote operator a telepresence effect in the plant through virtual and augmented reality tools.

Overall, the present invention proposes a robotic system for the inspection of plants including: a robotic device capable of performing on-site inspection routes, the remote control station with which the robotic device is connected via radio link and, optionally, a separate station for automatically recharging the batteries on board the robotic device, in order to achieve greater operational autonomy.

The robotic device (100) implemented as described therefore enables the above-mentioned purposes to be achieved in particular:
- autonomous and/or tele-operated inspection of plants from remote,
- compared to other known solutions currently being tested, is less complex and more efficient with consequent advantages also in terms of production and maintenance costs.

The hybrid locomotion device for the inspection of plants to replace the workforce currently employed on site, implemented as described above, therefore allows for more systematic, more efficient and also safer inspections, as the operator can supervise the operations of the robotic device from remote, remaining in the control room.

According to the present invention, it is therefore possible to perform complete and dynamic automated monitoring of the plant status by collecting data in native digital format and transmitting them in real time to an analysis system, e.g. based on 'digital twin' techniques. Analysis based on updated data collected from the field is essential to keep the plant model updated and thus enable the early detection or prediction of any critical issues, reducing the risks of malfunction or production downtime.

In addition, the robotic device can also be used in non-nominal situations, e.g. following accidents, with associated risk for operators, with reconnaissance and first response functions.

## Claims

1. Remotely operated hybrid locomotion robotic device for plant inspection, said robotic device (100) comprising a longitudinal base (1) consisting of a substantially rectangular box-like body equipped with an upper surface, a lower surface comprising at least four wheels (2), a first pair of lateral surfaces (7,7') and a second pair of lateral surfaces (8,8'), said second pair of lateral surfaces (8,8 ') being shorter in length than the first pair of lateral surfaces (7,7'), said second pair of lateral surfaces (8,8') being orthogonal to the first pair of lateral surfaces (7,7'), said robotic device (100) comprising inspection tools (100.3), said robotic device (100) comprising at least two first rotors (3.3') and at least two second rotors (4.4'), wherein the at least two first rotors (3.3') are larger size than the at least two second rotors (4.4') and the longitudinal base (1) internally houses a control unit (100.2) with remote connection to the control station said device comprising means (100.5) for localization inside the plant and devices (100.6) for measuring the relative distance between the robotic device (100) itself and obstacles, objects, operators, said device **characterized in that**
the at least two first rotors (3.3') are placed at the lateral ends corresponding to the second pair of lateral surfaces (8.8') of the base (1) and the at least two second rotors (4,4 ') are placed centrally with respect to the first pair of side surfaces (7,7') of the base (1) and placed in front of one another
the central axis of the two first rotors (3.3 ') is tiltable with respect to the longitudinal plane of the base (1),
the central axis of the two second rotors (4.4 ') is tiltable with respect to the longitudinal plane of the base (1).

2. Device as per claim 1 **characterized in that** the longitudinal base (1) comprises a handling device of pan-tilt type (5) to which the inspection tools (100.3) are associated, said handling device (5) having at least one panoramic rotation axis orthogonal to the plane of support of the robotic device (100) and a tilt rotation axis with respect to the support plane of the robotic device (100);

3. Device as per the preceding claims **characterized by** the fact that the inspection tools (100.3) are reversibly associated with a box-like body (5.1) which is in turn associated with the handling device (5), said inspection tools (100.3) being of the type optical instrument and consisting of at least one or more TV cameras for visual inspection and / or thermographic inspection and / or devices for detecting gas leaks

4. Device as per the preceding claims, **characterized in that** an anthropomorphic robotic arm (6) with at least five degrees of freedom is associated with the base (1).

5. Device as per claim 4, **characterized in that** inspection tools (100.3) of the type optical instruments and/or nondestructive inspection probes are reversibly associated with the termination of the anthropomorphic robotic arm (6).

6. Device as per the preceding claims, **characterized in that** the means for locating the robotic device (100) are of the lidar or 3D cameras type.

7. Device as per the preceding claims, **characterized in that** devices (100.6) for measuring the distance between the robotic device (100) and obstacles are associated with the base (1) and include at least an altitude sensor.

## Patentansprüche

1. Ferngesteuerte Robotervorrichtung mit hybrider Fortbewegung zur Anlageninspektion, wobei die Robotervorrichtung (100) eine Längsbasis (1) umfasst, die aus einem im Wesentlichen rechteckigen kastenartigen Körper besteht, der mit einer oberen Fläche, einer unteren Fläche umfassend mindestens vier Räder (2), einem ersten Paar Seitenflächen (7, 7') und einem zweiten Paar von Seitenflächen (8, 8') versehen ist, wobei das zweite Paar von Seitenflächen (8, 8') kürzer als das erste Paar von Seitenflächen (7, 7') ist, wobei das zweite Paar von Seitenflächen (8, 8') orthogonal zu dem ersten Paar von Seitenflächen (7, 7') ist, wobei die Robotervorrichtung (100) Inspektionswerkzeuge (100.3) umfasst, wobei die Robotervorrichtung (100) mindestens zwei erste Rotoren (3.3') und mindestens zwei zweite Rotoren (4.4') umfasst, wobei die mindestens zwei ersten Rotoren (3.3') größer als die mindestens zwei zweiten Rotoren (4.4') sind und die Längsbasis (1) innen eine Steuereinheit (100.2) mit einer Fernverbindung zu der Steuerstation aufnimmt, wobei die Vorrichtung Mittel (100.5) zur Lokalisierung innerhalb der Anlage und Vorrichtungen (100.6) zur Messung des relativen Abstands zwischen der Robotervorrichtung (100) selbst und Hindernissen, Objekten, Bedienern umfasst, wobei die Vorrichtung **dadurch gekennzeichnet ist, dass**
die mindestens zwei ersten Rotoren (3.3') an den seitlichen Enden an dem zweiten Paar von Seitenflächen (8,8') der Basis (1) angeordnet sind, und die mindestens zwei zweiten Rotoren (4, 4') mittig in Bezug auf das erste Paar von Seitenflächen (7, 7') der Basis (1) angeordnet sind und voreinander angeordnet sind,
die Mittelachse der beiden ersten Rotoren (3.3') gegenüber der Längsebene der Basis (1) kippbar ist,
die Mittelachse der beiden zweiten Rotoren (4.4') in Bezug auf die Längsebene der Basis (1) kippbar ausgebildet ist.

2. Vorrichtung nach Anspruch 1, **dadurch gekennzeichnet, dass** die Längsbasis (1) eine Handhabungsvorrichtung als Schwenk-Neige-Vorrichtung (5) umfasst, der die Inspektionswerkzeuge (100.3) zugeordnet sind, wobei die Handhabungsvorrichtung (5) mindestens eine Panoramadrehachse, die orthogonal zu der Stützebene der Robotervorrichtung (100) ist, und eine Neigungsdrehachse in Bezug auf die Stützebene der Robotervorrichtung (100) aufweist;

3. Vorrichtung nach den vorhergehenden Ansprüchen, **dadurch gekennzeichnet, dass** die Inspektionswerkzeuge (100.3) reversibel einem kastenförmigen Körper (5.1) zugeordnet sind, der wiederum der Handhabungsvorrichtung (5) zugeordnet ist, wobei die Inspektionswerkzeuge (100.3) als optische Instrumente ausgebildet sind und aus mindestens einer oder mehreren TV-Kameras zur visuellen Inspektion und/oder thermographischen Inspektion und/oder Vorrichtungen zur Erfassung von Gasaustritten bestehen.

4. Vorrichtung nach einem der vorhergehenden Ansprüche, **dadurch gekennzeichnet, dass** ein anthropomorpher Roboterarm (6) mit mindestens fünf Freiheitsgraden der Basis (1) zugeordnet ist.

5. Vorrichtung nach Anspruch 4, **dadurch gekennzeichnet, dass** Inspektionswerkzeuge (100.3) in Form von optischen Instrumenten und/oder zerstörungsfreie Prüfsonden reversibel dem Ende des anthropomorphen Roboterarms (6) zugeordnet sind.

6. Vorrichtung nach einem der vorhergehenden Ansprüche, **dadurch gekennzeichnet, dass** die Mittel zur Lokalisierung der Robotervorrichtung (100) als Lidar oder 3D-Kameras ausgeführt sind.

7. Vorrichtung nach einem der vorhergehenden Ansprüche, **dadurch gekennzeichnet, dass** Vorrichtungen (100.6) zur Messung des Abstandes zwischen der Robotervorrichtung (100) und Hindernissen der Basis (1) zugeordnet sind und mindestens einen Höhensensor umfassen.

## Revendications

1. Dispositif robotique de locomotion hybride télécommandé pour inspection de centrale, ledit dispositif robotique (100) comprenant une base longitudinale (1) constituée d'un corps en forme de boîte sensiblement rectangulaire équipé d'une surface supérieure, d'une surface inférieure comprenant au moins quatre roues (2), d'une première paire de surfaces latérales (7,7') et d'une seconde paire de surfaces latérales (8,8'), ladite seconde paire de surfaces latérales (8,8') étant plus courte que la première paire de surfaces latérales (7,7'), ladite seconde paire de surfaces latérales (8,8') étant orthogonale à la première paire de surfaces latérales (7,7'), ledit dispositif robotique (100) comprenant des outils d'inspection (100.3), ledit dispositif robotique (100) comprenant au moins deux premiers rotors (3.3') et au moins deux seconds rotors (4.4'), dans lequel les au moins deux premiers rotors (3.3') sont plus grands que les au moins deux seconds rotors (4.4') et la base longitudinale (1) abrite à l'intérieur une unité de commande (100.2) reliée à distance au poste de commande, ledit dispositif comprenant des moyens (100.5) de localisation à l'intérieur de la centrale et des dispositifs (100.6) de mesure de la distance relative entre le dispositif robotique (100) lui-même et les obstacles, les objets, les opérateurs, ledit dispositif étant **caractérisé en ce que**
les au moins deux premiers rotors (3.3') sont placés au niveau des extrémités latérales correspondant à la seconde paire de surfaces latérales (8.8') de la base (1) et les au moins deux seconds rotors (4,4') sont placés au centre par rapport à la première paire de surfaces latérales (7,7') de la base (1) et placés l'un devant l'autre,
l'axe central des deux premiers rotors (3.3') est inclinable par rapport au plan longitudinal de la base (1),
l'axe central des deux seconds rotors (4.4') est inclinable par rapport au plan longitudinal de la base (1).

2. Dispositif selon la revendication 1 **caractérisé en ce que** la base longitudinale (1) comporte un dispositif de manipulation de type pan-tilt (5) auquel sont associés les outils d'inspection (100.3), ledit dispositif de manipulation (5) ayant au moins un axe de rotation panoramique orthogonal au plan de support du dispositif robotique (100) et un axe de rotation d'inclinaison par rapport au plan de support du dispositif robotique (100) ;

3. Dispositif selon les revendications précédentes **caractérisé par le fait que** les outils d'inspection (100.3) sont associés de manière réversible à un corps en forme de boîte (5.1) lui-même associé au dispositif de manipulation (5), lesdits outils d'inspection (100.3) étant du type instrument optique et consistant en au moins une ou plusieurs caméras de télévision pour l'inspection visuelle et/ou l'inspection thermographique et/ou des dispositifs de détection de fuites de gaz.

4. Dispositif selon les revendications précédentes, **caractérisé en ce qu'**un bras robotique anthropomorphe (6) à au moins cinq degrés de liberté est associé à la base (1).

5. Dispositif selon la revendication 4, **caractérisé en ce que** des outils d'inspection (100.3) de type instruments optiques et/ou sondes de contrôle non destructif sont associés de manière réversible à l'extrémité du bras robotique anthropomorphe (6).

6. Dispositif selon les revendications précédentes, **caractérisé en ce que** les moyens de localisation du dispositif robotique (100) sont du type lidar ou caméras 3D.

7. Dispositif selon les revendications précédentes, **caractérisé en ce que** les dispositifs (100.6) de mesure de la distance entre le dispositif robotique (100) et les obstacles sont associés à la base (1) et comprennent au moins un capteur d'altitude.
